# EUROPEAN PATENT APPLICATION

(11) **EP 1 043 826 A2**
(43) Date of publication of application: **11.10.2000**
(21) Application number: 00302921.2
(22) Date of filing: 06.04.2000
(51) Int. Cl.: H02J 9/02

(54) **Emergency lighting unit and remote handset**

(30) Priority: 06.04.1999 GB 9907610
(71) Applicant: Cooper Lighting and Security Limited, Doncaster, South Yorkshire DN2 4NB (GB)
(72) Inventor: Harwood, Ian, Cooper Lighting and Security Ltd,, Doncaster, South Yorkshire DN2 4NB (GB); Smith, Roger, Cooper Lighting and Security Ltd, Doncaster, South Yorkshire DN2 4NB (GB)
(74) Representative: Robinson, Ian Michael

(57) **Abstract**

An emergency lighting unit (10) that includes a memory (22) for storing at least one predetermined test regime and a control circuit 12 for performing mains failure tests according to the stored regime. In one embodiment a test start time offset is selected using programming switches (26). In another embodiment (see Figure 3) the emergency lighting unit (10) includes a communications unit (30) for bi-directional communication with a remote handset (40). Information concerning each test is stored in the memory (22) and may be downloaded to the handset (40). Further, information stored in the memory (22) such as a start time offset and a selected test regime may be updated by signals sent from the handset (40).

## Description

The present invention relates in general to the field of emergency lighting units and in particular but not exclusively to an emergency lighting unit cooperating with a remote handset.

Emergency lighting units provide backup illumination in the event of a mains power failure. Typically, an emergency lighting unit comprises an incandescent bulb or fluorescent tube coupled to a mains ac power supply during normal operation. The mains power is also used to charge a battery. In the event of a failure in the mains power supply illumination is maintained from the battery, either through the main bulb or tube, or through a supplementary bulb or tube.

It is desired to test the operation of the emergency lighting units regularly, to ensure that the battery is being charged and that the unit will function properly in the event of a mains failure. Emergency lighting units are commonly provided with monitor lamps or LEDs to provide a visual indication of the current status of the unit. However, a frequent visual inspection of each unit is not practical. Further, the monitor lamps in themselves do not confirm that the unit will function reliably in the event of a mains failure. Therefore, it is desired to simulate the effects of a mains failure at regular intervals, to test the reliable operation of the emergency lighting unit.

In the simplest known embodiments the emergency lighting unit is provided with a switch (such as a manual push-switch) for interrupting the mains power supply to simulate a mains failure. However, such lighting units are often provided at relatively inaccessible locations, requiring the use of a ladder to reach the unit. Further, to comply with current regulations the lighting unit periodically must be switched to the test mode for a relatively long period of time, such as of the order of one to three hours. At the end of this period the operator must return, check that the unit has functioned satisfactorily to provide backup illumination from the battery, and then return the unit to the normal operating mode. As a development of this system it is known to provide a wall mounted key switch remote from the lighting unit and a wiring connection therebetween. However, the operator must still operate and return to the key switch, and the wiring adds to the cost and complexity of installation.

EP-A-0,780,821 discloses an emergency lighting unit having a remote handset. The unit enters a test mode to simulate the effects of mains failure for the duration that a control signal is received from the remote handset. Other known emergency lighting units such as disclosed in US-A-5,148,158 start an automatically timed test upon receipt of a start signal from a remote handset.

The stand-alone emergency lighting unit such as disclosed in the EP-A-0,780,821 advantageously may be installed at any convenient location, limited only by the availability of a mains power supply. Additional lighting units can be provided at any time and the lighting units can be removed with minimum disruption. However, the known stand-alone emergency lighting units still require the active intervention of an operator to test each emergency lighting unit, which is a costly and time consuming procedure.

It is known to use a central control unit such as a personal computer to control the automatic testing of emergency lighting units. In order to provide a reliable and cost effective communication path between the central control unit and the individual emergency lighting units it is necessary to use physical wiring. It has been found that such central control systems have a number of disadvantages in that high installation costs are involved, and once installed the system cannot readily be changed, for example, to accommodate additional lighting units, unless the wiring is moved or new wiring is installed. Further, each element of the system must be assigned a unique address and accurate records are required to trace the physical location of each addressed item. Therefore, even though centrally controlled systems offer many advantages in terms of automatic testing, fault reporting and on-going maintenance, in practice the costs involved mean that such systems are only suitable for relatively large sites. Centrally controlled systems are not seen as a cost effective solution at smaller and medium size sites.

An aim of the present invention is to provide stand-alone emergency lighting unit having a convenient test procedure. Further aims include providing an emergency lighting unit having an automatic test feature, that improves safety, complies with current test regulations, and is cost effective.

According to a first aspect of the present invention there is provided an emergency lighting unit, comprising: memory means for storing at least one predetermined test regime; and a control circuit for applying a test simulating mains supply failure at predetermined intervals and for a predetermined duration according to the test regime stored in the memory means.

Preferably, the emergency lighting unit comprises a communication means for communication with a remote handset. Suitably the communication means is arranged to receive signals transmitted from the remote handset or to transmit signals to the remote handset or both. Preferably, the communication is bi-directional. Any suitable transmission signals may be employed including, for example, radio frequency (RF) or infra-red (IR) signals.

Preferably, the emergency lighting unit is arranged to transmit information via the communication means to the remote handset, preferably being information stored in the memory means. Suitably any of the information stored in the memory means is arranged to be transmitted upon receipt of a prompt signal from the handset, and suitably one of plurality of prompt signals each associated with a particular information stored in the memory means.

Suitably, the memory means is arranged to record information concerning at least the most recent test and preferably information concerning each of a plurality of previous tests. Stored information concerning the or each test preferably includes a test identifier (such as the number of the test in the stored regime), the duration of the test, the start time of the test (such as the day and time of day), and the result of the test (e.g., pass or fail). Suitably, the control circuit is arranged to monitor the operation of the emergency lighting unit during the test, and ideally also during a normal operating mode, to determine fault conditions. Such fault conditions include, for example, battery recharging failure, lamp failure or battery output failure. Preferably, the control circuit is arranged to transmit information concerning the current operating status and/or any determined fault condition in response to status and/or fault type prompt signals received from the remote handset via the communication means.

Preferably, the test regime stored in the memory means is updated in response to reprogramming signals obtained via the communication means. Additionally or alternatively, one of a plurality of stored test regimes is selected in response to test regime select signals received via the communication means.

Preferably, the memory means is arranged to store a start time offset. Suitably the start time offset is updated in response to start time update signals received via the communications means. In one embodiment the start time if selectable between one of a plurality of predetermined offsets in response to start time selection signals received via the communication means.

Preferably, the control circuit comprises real time clock means for maintaining a current time (e.g. day and time of day) within the test regime. Suitably the current time of the clock means is updated in response to clock update signals received via the communication means.

Preferably, the predetermined interval of the, or at least one of the, stored test regime(s) repeats on a seven day cycle or multiple thereof, preferably 14 days and most preferably 28 days. Advantageously, the cycle of the test regime allows a test to be repeated on the same day of the week at each occurrence.

Preferably, the control circuit is operable to perform a mains failure test immediately in response to manual test start signals received via the communication unit. Conveniently, the manual test is performed for a predetermined period and preferably a selectable period such as a long test of the order of one hour to three hours, or a short test of the order of ten seconds to five minutes.

Further preferably, the emergency lighting unit comprises an audible alarm means operable in response to the determination of one or more of the fault conditions. Preferably, the control circuit is arranged to silence the audible alarm upon receipt of alarm silence signals via the communications means. Further preferably the control circuit is arranged to reinstate the audible alarm after a predetermined period, such as seven days, if a fault condition is determined, or if a re-instate signal is received.

The preferred communications means, comprising an infra-red transceiver, may be located at any suitable position. Conveniently, the transceiver is arranged remote from the main luminaire housing. Preferably, the transceiver is located so as to be directed through an aperture in a louvre flange of a housing of the emergency lighting unit. Suitably, the louvre flange is arranged substantially horizontally in use, preferably at one end of a generally elongate housing and ideally transversely across the housing.

In one preferred embodiment, the emergency lighting unit comprises a switch setting means for cooperating with the memory means and the control circuit to determine the start time of each test. The switch setting means is suitably a physical switch such as a dip switch package. Preferably, the switch setting means sets a day offset (24 hour period) and hour offset (60 minute period) for the start time from a predetermined marker signal. Suitably the marker signal is generated when power is first supplied to the control circuit and/or in response to a reset signal. Therefore, the emergency lighting unit is controlled to undertake the automatic test procedure at a predictable and convenient time of day and day of the week.

Also according to the present invention there is provided a remote handset for use with the emergency lighting unit defined herein.

For a better understanding of the invention, and to show how embodiments of the same may be carried into effect, reference will now be made, by way of example, to the accompanying diagrammatic drawings, in which:
Figure 1 is a schematic block diagram of a first preferred embodiment of an emergency lighting unit;
Figure 2 is a schematic block diagram of a control circuit of the embodiment of Figure 1;
Figure 3 is a schematic block diagram of a second preferred embodiment of an emergency lighting unit;
Figures 4, 5 and 6 are schematic flowchart diagrams illustrating operation of the emergency lighting unit and remote controller of Figure 3; and
Figure 7 is a perspective view illustrating part of the housing of the second preferred embodiment.

The preferred embodiments of the present invention will be described in terms of a luminaire type of emergency lighting unit. The present invention is applicable to other types of emergency lighting unit including, for example, location signs and direction signs.

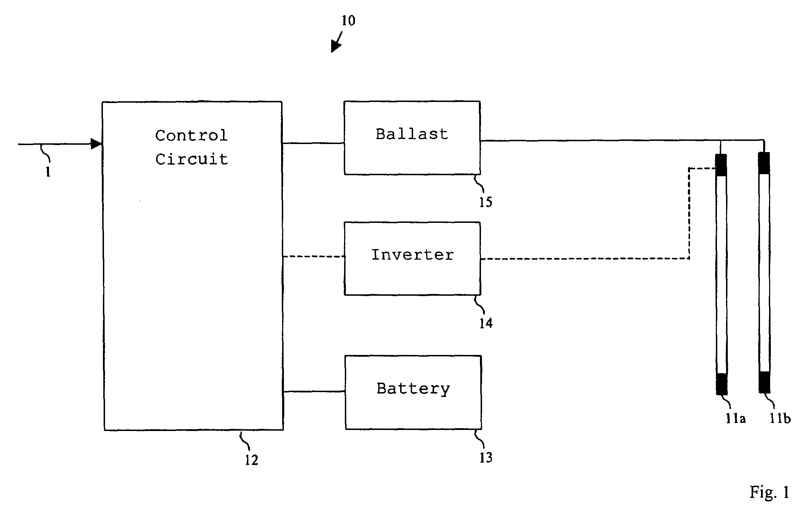

Referring to Figure 1, the luminaire 10 is intended to be installed at any convenient location, typically on a wall or ceiling, and coupled to any suitable power supply such as a mains AC power supply 1.

During normal operation of the luminaire 10 the mains power supply 1 is coupled to light output means, in this example comprising two fluorescent tubes 11a and 11b. In normal operation both tubes 11a and 11b are powered through a ballast 15. A reserve power supply such as a DC battery 13 is charged from the mains AC supply 1 through a control circuit 12.

In the event of a failure in the mains power supply 1 the control circuit 12 enters an emergency mode wherein illumination from at least one of the fluorescent tubes 11a is maintained from the battery 13 through an inverter 14. The emergency lighting unit 10 is arranged to maintain illumination for a rated period, such as three hours, unless the mains AC supply 1 is restored earlier.

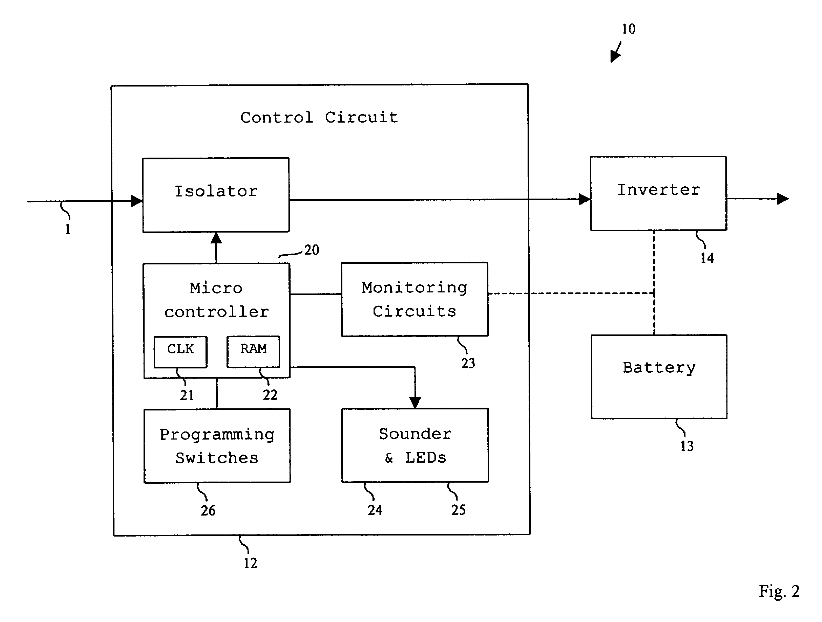

Referring to Figure 2, the control circuit 12 will now be described in more detail.

The control circuit 12 comprises a microcontroller 20 coupled to fault monitoring circuits 23, and to audible and visual fault indicators such as a sounder 24 and LED(s) 25.

The monitor circuit 23 is arranged to monitor correct functioning of the emergency lighting unit. In the preferred embodiment the monitor circuit 23 includes a lamp current monitoring circuit for monitoring current through at least one of the lamps 11a. Suitably the lamp current monitoring circuit is a window detector. A fault condition is determined if the lamp current is high (above a predetermined maximum) or low (below a predetermined minimum). A high fault determines that, for example, a cathode short has occurred in the lamp 11a thereby indicating lamp failure. Further, the monitor circuit 23 includes a battery monitor circuit constantly monitoring voltage and charge current of the battery 13.

When the microcontroller 20 and the monitoring circuits 23 determine a fault, a visual and/or audible warning is given through sounder 24 and LED(s) 25. Conveniently the nature of the warning is used to indicate the type of fault. Any convenient system may be used to indicate the type of fault, including the flash rate of one or more LED(s) and/or a combination of lit LED(s) and/or a combination of lit LED(s) and an audible signal.

The microcontroller 20 suitably includes a real time clock 21 and a memory 22. The memory 22 may take any suitable form, and in the preferred embodiment comprises a solid state memory device such as RAM or an EEPROM. The memory 22 stores, amongst other things, at least one predetermined test regime. Under the or each test regime the emergency lighting unit is controlled to enter a test mode simulating the failure of the mains AC power supply 1 at predetermined intervals and for a predetermined duration. Currently it is desired to undertake a short duration test (of about 10 seconds to 5 minutes duration) at least once every calendar month, a medium duration test (of about 1 hour duration) at least once every six calendar months, and a full test to the rated performance of the emergency lighting unit (of about 1 hour to 3 hours) at least once every calendar year. However, this is only an example of a currently preferred test regime which may change over time or according to local regulations.

The preferred embodiment stores at least two predetermined test regimes, for example meeting the requirements of known standards such as BS5266 for the United Kingdom or prEN50172 in the European Union. One or more custom regimes can be programmed by the user specific to each emergency lighting unit.

The control circuit 12 advantageously uses a predetermined test regime stored in memory means 22 to carry out the tests automatically, avoiding the need for manual intervention to perform each test. Further, in the preferred embodiment the or each test regime stored in the memory 22 is arranged to repeat on a twenty-eight day cycle (or other 7-day multiple) such that each test in the regime is performed on the same day of the week. Therefore, the tests can be performed at a time and day which causes minimum inconvenience to occupants of a building, and which minimises the safety risks associated with an emergency lighting unit being out of action through testing.

The real time clock 21 of the microcontroller 20 is used as a reference for the interval between tests and the duration of each test based upon the test regime stored in the memory means 22. Conveniently the real time clock 21 runs from the point at which power is first supplied to the control circuit 12 and/or from a predetermined reset signal.

In the first preferred embodiment, the control circuit 12 comprises a plurality of programming switches 26 coupled to the microcontroller 20. The programming switches 26 determine a day offset (24 hour period) and a time offset (suitably to the nearest 60 minute period) of the next automatic test from the reset signal applied to the real time clock 21. Where a plurality of test regimes are stored in the memory 22, the programming switches 26 enable selection of the desired regime. Suitably the programming switches 26 are manually operable switches such as a dip switch package. The programming switches 26 allow the automatic test procedure of the emergency lighting unit to be set by one manual operation, conveniently at the time of installation. Advantageously, service and maintenance personnel do not need to attend the unit again unless a fault is determined. Further, the emergency lighting unit can be conveniently implemented as a stand alone unit, minimising wiring impact and minimising cost and complexity of the overall lighting system.

In a more complex variation of the first preferred embodiment, the emergency lighting unit 40 stores data concerning each of a plurality of previous tests, such as the last 6 or last 12 tests. Preferably, data concerning all previous tests is stored in the memory 22 and includes the start time of the test, the type (e.g. long or short duration), and the result (e.g. pass or fail). The stored data also includes the failure type as determined by the monitor circuit 23. This stored data can be read out by any suitable means, which in the preferred embodiment includes, for example, driving the LED(s) and/or audible signal(s) in patterns representing the stored information.

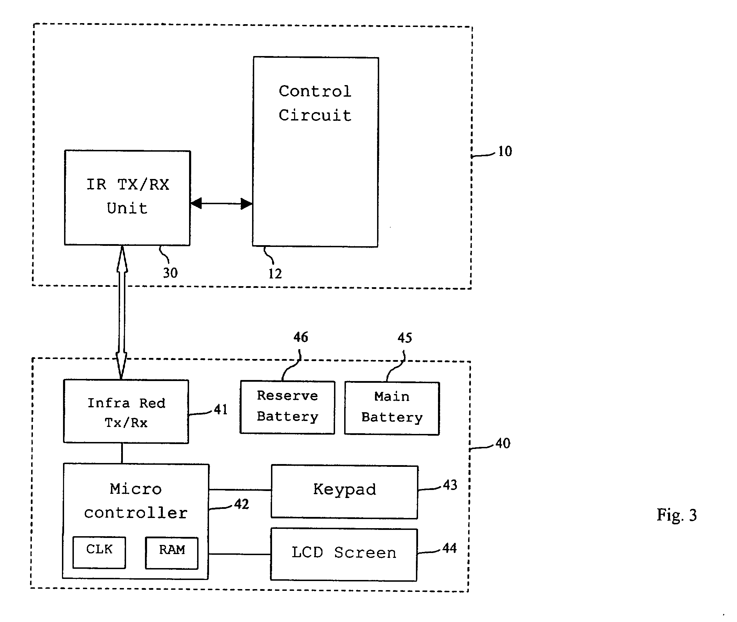

A second preferred embodiment will now be described with reference to Figures 3 to 7. Equivalent or like components of the second embodiment have been given the same reference numerals as used in Figures 1 and 2.

Referring to Figure 3, the second preferred embodiment of the emergency lighting unit 10 comprises a communication unit 30 coupled to the control circuit 12. The communication unit 30 includes a transceiver for receiving and transmitting signals through space, suitably radio frequency signals or, in the preferred embodiment, infra-red signals.

The communication unit 30 is arranged to co-operate with a corresponding transceiver 41 suitably located in a remote handset 40. The handset 40 may take any suitable form including, for example, a general purpose device such as a computer and suitably a portable computer such as a laptop or palmtop computer. However, in the example embodiment of Figure 3 the handset 40 is a dedicated portable handheld device comprising a microcontroller 42 co-operating with a user keypad 43 and an alpha-numeric display 44. The handset 40 preferably comprises a main battery power supply 45 coupled through a low voltage detector, and a short term backup battery supply 46.

As in the first preferred embodiment, the memory 22 of the control circuit 12 stores, amongst other things, at least one predetermined test regime. Further, the memory 22 stores data concerning at least the last test, and preferably a plurality of previous tests.

Suitably the infra-red communication between the communication unit 30 and the handset 40 comprises burst transmissions having, for example, a unit identification code, a start bit, a command, and a data variable. In one example embodiment each burst transmission comprises a one bit start bit, an eight bit ID code, a five bit command and a six bit data variable. An ID code is ideally uniquely assigned to each handset 40 and each emergency lighting unit 10.

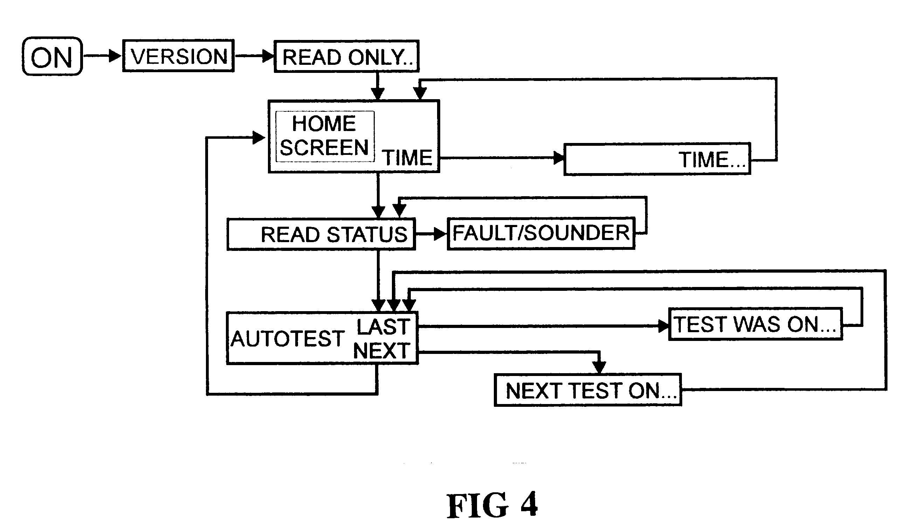

Operation of the second preferred embodiment will now be described in more detail with reference to Figures 4, 5 and 6.

Figure 4 is a flow diagram illustrating operation of the handset 40 in a read-only mode. This mode allows information to be downloaded from the emergency lighting unit 10 to the handset 40. In the illustrated embodiment, the downloaded information suitably selectively includes the current time, the type (e.g. long or short duration) and time of the next scheduled test, and the data for the last test, or one of the stored previous tests.

The read-only mode also advantageously allows the operator to see the downloaded data as a text message on the alpha-numeric display 44. The downloaded data may be displayed directly, or may be interpreted by the handset microcontroller 42, such as to provide a text message explaining a fault condition encountered. Suitably the text message is generated by the microcontroller 42 in the handset 40, based on status information and/or test data sent by the emergency lighting unit 10 in response to a corresponding interrogation signal from the handset 40. Such a text message is more informative and much more convenient than other fault reporting arrangements which rely on a combination of LED and sounder signals to be interpreted by the user.

Suitably, the handset 40 stores data downloaded from each of a plurality of emergency lighting units 10. Thus, downloaded data may be manipulated at the handset 40 or at, for example, a central processing station such as a higher powered computing device. Advantageously, communication between the emergency lighting unit 10 and the handset 40 occurs over a relatively short distance, allowing relatively simple communication components to be employed.

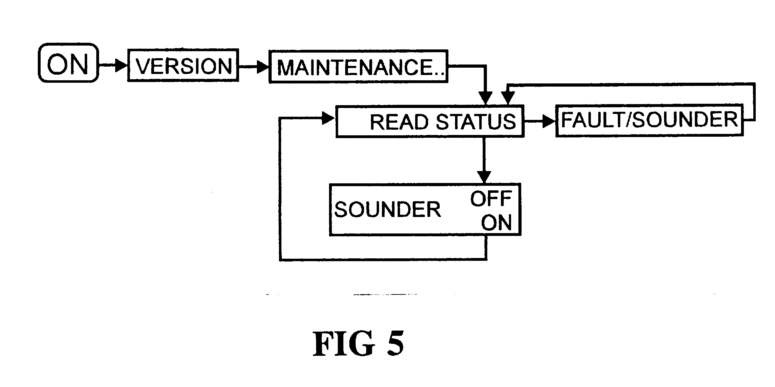

Figure 5 illustrates the operation of the handset 40 in a maintenance mode. Here, status information may be downloaded, as in the read only mode. Also, when a fault condition has been established and a user alerted such as through the sounder 24 and LEDs 25, it may take some time for maintenance personnel to arrive and deal with the fault. In order to minimise inconvenience to users in the vicinity of the emergency lighting unit, the remote handset 40 is operable to silence the sounder 24 by sending a sounder disable signal. To ensure that the fault condition is not permanently forgotten or ignored, the sounder is automatically reinstated after a predetermined period, such as twenty four hours or seven days, or in response to a re-instatement signal from a handset 40.

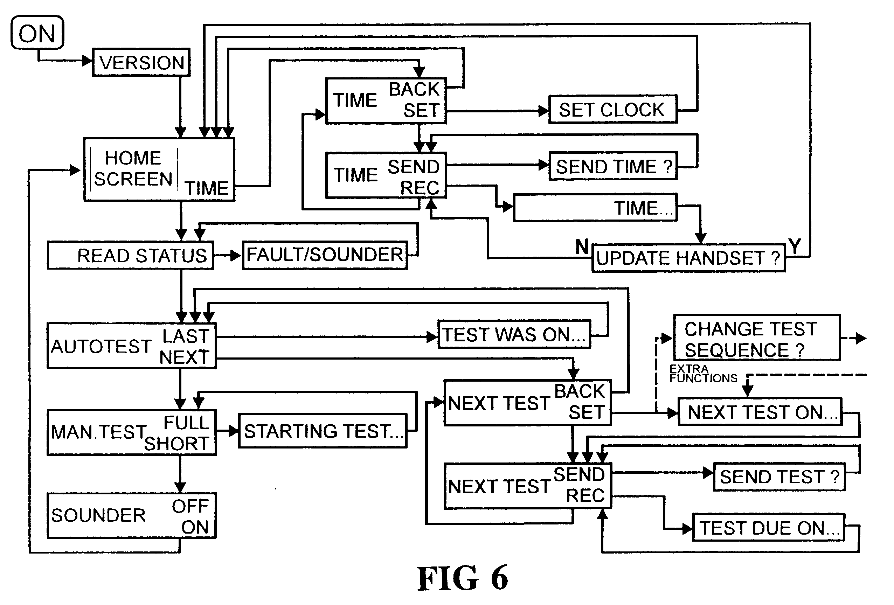

Referring now to Figure 6, a programming mode of the handset 40 is illustrated. The programming mode combines the features of the maintenance mode and the read-only mode described above. The programming mode also allows the local time held by a real time clock 21 of the emergency lighting unit 10 to be synchronised with the handset 40 (or vice versa) and/or enables setting of the next test time of the emergency lighting unit to a convenient time and day within the cycle of the test regime. Further, the programming mode allows a test to be started manually, extra to the automatic test regime, ideally upon or soon after transmission of a manual test start signal. Suitably, the user may choose between a short test, for example of the order of 10 seconds to 5 minutes, or a longer test, for example of the order of 1 hour or up to the full rated duration of the emergency lighting unit.

In the programming mode information concerning the currently selected test regime is sent from the unit 10 to the handset 40 in response to a test regime interrogation signal. A desired test regime may be selected from amongst a plurality of predetermined test regimes stored in the memory means 22 of the emergency lighting unit using a test regime select signal sent from the handset 40 to the unit 10. Also, a customised test regime may be stored in the emergency lighting unit using the handset 40, allowing a high degree of flexibility and individual customisation.

Optionally, the programming mode allows alteration of the test sequence within one of the predetermined test regimes. For example, a regime that performs a long test at every sixth interval can be altered such that the long test is performed at a desired point, such as the next interval, followed then by the usual sequence of five short tests before the next full test. Therefore, the current position within the test regime may be moved, for example to synchronise a newly installed unit with existing units.

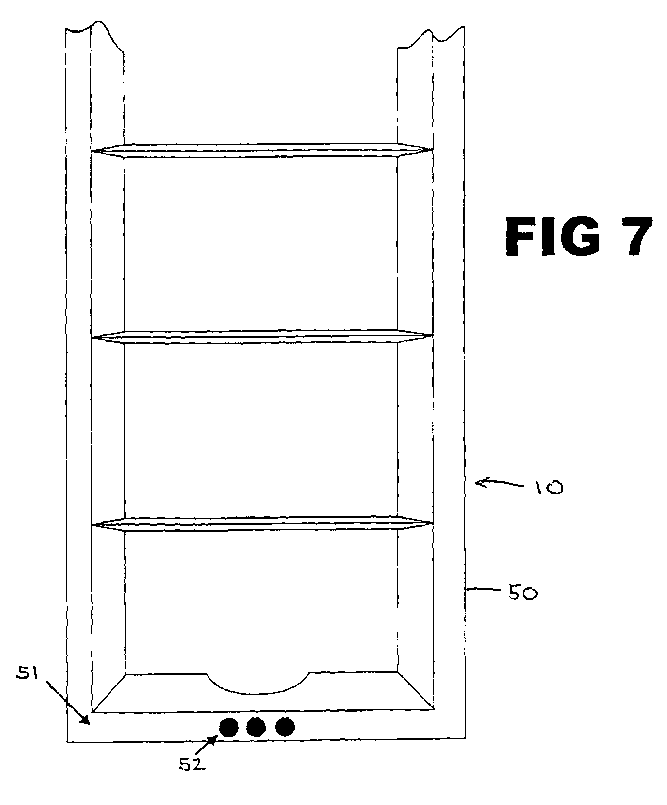

The infra-red transceiver 30 may be arranged as a separate unit at any convenient location in the vicinity of the emergency lighting unit 10, and if desired may be arranged remote therefrom. However, as illustrated in Figure 7, the transceiver is preferably located so as to be secured to a main body portion of an external housing 50 of the emergency lighting unit. The transceiver is covered in use by a removable section 51 of the housing 50, and arranged to coincide with a signal transparent portion thereof 52, in the preferred embodiment being one or more apertures. For the preferred luminaire type of emergency lighting unit, the removable section is suitably a louvre flange, resulting in a convenient and aesthetically pleasing arrangement.

An emergency lighting unit and a remote handset for use therewith have each been described. The emergency lighting unit has many advantages, including that a complete test regime may be conducted automatically with only very infrequent attendance by maintenance personnel. Further, the emergency lighting unit is flexible and can adapt to changing test regimes over time or in different circumstances. Further, the emergency lighting unit is provided as a stand alone unit and is simple and cost effective to install and maintain. Further still, in one embodiment information concerning some or all previous tests is stored in the emergency lighting unit, allowing the unit to maintain an accurate service history record. Other benefits and advantages of the emergency lighting unit and the remote handset will be apparent from the discussion above.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An emergency lighting unit, comprising:
memory means (22) for storing at least one predetermined test regime; and
a control circuit (12) for applying a test simulating mains failure at predetermined intervals and for a predetermined duration according to the test regime stored in the memory means (22).

2. An emergency lighting unit as claimed in claim 1, comprising communication means (30) for bi-directional communication with a remote handset (40).

3. An emergency lighting unit as claimed in claim 2, wherein the communication means 30 is arranged to transmit information stored in the memory means (22).

4. An emergency lighting unit as claimed in claims 2 or 3, wherein the communication means (30) is arranged to transmit information stored in the memory means (22) in response to an interrogation signal.

5. An emergency lighting unit as claimed in any of claims 1 to 4, wherein the memory means (22) is arranged to record information concerning one or more tests performed by the control circuit (12) under the predetermined test regime.

6. An emergency lighting unit as claimed in claim 5, wherein the information stored in the memory means (22) concerning the or each test includes one or more of a test identifier, a test duration, a test start time and a test result.

7. An emergency lighting unit as claimed in any of claims 2 to 6, wherein the communication means (30) is arranged to transmit information concerning a current operating status of the emergency lighting unit or a determined fault condition.

8. An emergency lighting unit as claimed in any of claims 2 to 7, wherein the test regime stored in the memory means (22) is updateable in response to reprogramming signals received via the communication means (30) and/or one of a plurality of test regimes stored in the memory means (22) is selectable in response to a test regime select signal received via the communication means (30).

9. An emergency lighting unit as claimed in any of claims 2 to 8, wherein the memory means (22) is arranged to store a start time offset, and the start time offset is updateable in response to start time update signals received via the communication means (30).

10. An emergency lighting unit as claimed in any of claims 2 to 9, wherein the control circuit (12) comprises real time clock means (21) which is updateable in response to clock update signals received via the communication means (30).

11. An emergency lighting unit as claimed in any of claims 2 to 10, wherein the communication means (30) comprises a transceiver located adjacent a louvre flange (51) of a housing (50) of the emergency lighting unit.

12. A remote handset for use with an emergency lighting unit as claimed in any of claims 1 to 11.
